(19) Europäisches Patentamt
European Patent Office
Office européen des brevets

(11) **EP 2 799 907 B1**

## (12) EUROPEAN PATENT SPECIFICATION

(45) Date of publication and mention
of the grant of the patent:
**03.03.2021 Bulletin 2021/09**

(51) Int Cl.:
**G01S 19/09** (2010.01)   **G01S 19/14** (2010.01)
**G01S 19/36** (2010.01)

(21) Application number: **13002338.5**

(22) Date of filing: **02.05.2013**

(54) **Positioning by using encrypted GNSS navigation signals**

Positionierung durch Verwendung von verschlüsselten GNSS-Navigationssignalen

Positionnement par utilisation de signaux de navigation GNSS chiffrés

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.11.2014 Bulletin 2014/45**

(73) Proprietor: **Airbus Defence and Space GmbH**
**82024 Taufkirchen (DE)**

(72) Inventors:
• **Wendel, Jan**
**81373 München (DE)**
• **Kogler, Wolfgang**
**85521 Ottobrunn (DE)**

(74) Representative: **Frenkel, Matthias Alexander**
**Wuesthoff & Wuesthoff**
**Patentanwälte PartG mbB**
**Schweigerstrasse 2**
**81541 München (DE)**

(56) References cited:
• **Glen Gibbons: "Civil Galileo System Poses New Options for Secure Services", Inside GNSS, 18 December 2012 (2012-12-18), XP055089141, Retrieved from the Internet: URL:http://www.insidegnss.com/node/3326 [retrieved on 2013-11-19]**
• **MARTIN N ET AL: "BOC(x,y) Signal Acquisition Techniques and Performances", ION GPS/GNSS, XX, XX, 9 September 2003 (2003-09-09), pages 188-198, XP002338824,**

• **FISCHER S ET AL: "Acquisition Concepts for Galileo BOC", PROCEEDINGS / 2004 IEEE 59TH VEHICULAR TECHNOLOGY CONFERENCE, VTC 2004-SPRING : TOWARDS A GLOBAL WIRELESS WORLD ; 17 - 19 MAY 2004, MILAN, ITALY, IEEE OPERATIONS CENTER, PISCATAWAY, NJ, vol. 5, 17 May 2004 (2004-05-17), pages 2852-2856, XP010766771, DOI: 10.1109/VETECS.2004.1391445 ISBN: 978-0-7803-8255-8**
• **DAVIDE MARGARIA ET AL: "Galileo AltBOC signal multiresolution acquisition strategy", IEEE AEROSPACE AND ELECTRONIC SYSTEMS MAGAZINE, IEEE SERVICE CENTER, PISCATAWAY, NJ, US, vol. 23, no. 11, 1 November 2008 (2008-11-01), pages 4-10, XP011239176, ISSN: 0885-8985, DOI: 10.1109/MAES.2008.4693984**
• **ADINA BURIAN ET AL: "BPSK-like Methods for Hybrid-Search Acquisition of Galileo Signals", COMMUNICATIONS, 2006. ICC '06. IEEE INTERNATIONAL CONFERENCE ON, IEEE, PI, 1 June 2006 (2006-06-01), pages 5211-5216, XP031025740, ISBN: 978-1-4244-0354-7**
• **PAVEL KOVÁR ET AL: "Galileo Receiver Core Technologies", JOURNAL OF GLOBAL POSITIONING SYSTEMS, vol. 4, no. 1&2, 1 January 2005 (2005-01-01), pages 176-183, XP055089648, ISSN: 1446-3156, DOI: 10.5081/jgps.4.1.176**

**Description**

TECHNICAL FIELD

The invention relates to positioning by using encrypted GNSS navigation signals.

BACKGROUND

In the European Global Navigation Satellite System (GNSS) Galileo, the Galileo Public Regulated Service (PRS) service offers secured navigation for authorized users. The access control to the PRS service is achieved by encryption of ranging codes and data, so that only a PRS receiver can acquire and track these encrypted GNSS navigation signals and perform a positioning, particularly calculate a Position, Velocity, time (PVT), if appropriate keys for decrypting the encrypted GNSS navigation signals are available. The security processing such as the decrypting is performed inside the security module of the PRS receiver, which is a major driver for complexity, power consumption and cost.

The need for a security module inside the receiver can be overcome, if the receiver just captures raw GNSS digital samples, and sends them over a secured communication link to a secured server containing a software PRS receiver and appropriate PRS keys. The secured server calculates a PVT from these raw GNSS samples, and sends the PVT - or just a position fix - back to the receiver. The drawback of this approach is the huge amount of data that has to be transferred via the communication network due to the large bandwidth of the PRS signals: In order to calculate a position fix, a snapshot size of between several milliseconds and more than one second is required, depending on the required sensitivity. Considering for example the BOCc

(Binary Offset Carrier) (15,2.5) PRS signal on E1, complex baseband samples at a minimum rate of 32.5 MHz are required to capture the main lobes of the signal. With a 3-bit ADC (Analog Digital Converter) and a snapshot size of only 100 ms, this already leads to almost 20 Mbit of data per snapshot.

The receiver manufacturer u-blox AG, Zürich, Switzerland, offers a technology called "Capture & Process". Hereby, the receiver acquires 200ms of raw (NAVSTAR-)GPS (Global Positioning System) baseband or IF (Intermediate Frequency) samples, which are processed later on a PC (Personal Computer) to generate a position fix. The required additional information like Ephemeris data is provided by a server via the internet. This technique is used e.g. for geo-tagging of images, and offers the advantage that when an image shall be taken for which geo-tagging is desired, it is not necessary to wait for the GPS receiver to acquire and track the GPS signals, which would take between seconds and minutes. This approach does not provide position fixes in realtime or near-realtime.

The ULTRA project aims at the development of an ultra low-cost PRS receiver, based on the approach described above: Raw baseband or IF samples are transferred via a secured communication link to a secured server containing a software PRS receiver. At the secured server the raw baseband or IF samples are used to calculate a position fix, which is then sent back to the receiver. As mentioned above, the load for the communication network connected to the transfer of raw baseband or IF samples from the receiver to the secured server is extremely demanding for PRS signals, which have a significant larger bandwidth than e.g. the GPS SPS open signal. The project website can be found at http://www. ultra-prs.eu. Also, the publication Glen Gibbons: "Civil Galileo System Poses New Options for Secure Services", Inside GNSS, 18 December 2012 (2012-12-18), XP055089141, from the Internet: URL:http://www.insidegnss.com/node/3326 , describes the ULTRA project.

SUMMARY OF INVENTION

It is an object of the invention to provide positioning by using encrypted GNSS navigation, wherein a secured server is used and the amount of data transmitted to a secured server is reduced compared to the known methods described at the beginning.

This object is achieved by the subject matter of the independent claims. Further embodiments are shown by the dependent claims.

The invention proposes to capture only one of the sidebands of an encrypted GNSS navigation signal, which is modulated with a BOC method, in order to reduce the amount of data that has to be transferred from a GNSS receiver to a secured server. This can be achieved in different ways: Either, by an appropriate combination of front-end, down-conversion, filtering and ADC (Analog Digital Conversion) conversion only one of the encrypted GNSS navigation signal sidebands is sampled, or the encrypted GNSS navigation signal is sampled completely and the reduction to one sideband allowing for the reduction of the sample rate is performed by signal processing techniques. With the proposed invention, following advantages can be observed:

-   All advantages of the architecture described in the ULTRA-project are maintained: No security module is required at a GNSS receiver, which allows for reductions in cost, complexity, and power consumption of the GNSS receiver.

Furthermore, security issues related to the receiver are avoided.

- The amount of baseband or IF samples that have to be transferred from a GNSS receiver without a security module to a secured server for calculating a PVT is significantly reduced. Alternatively, for a given data transfer volume, the time interval for which samples can be captured is increased, which allows for a higher sensitivity.

An embodiment of the invention relates to a method for positioning by using encrypted GNSS navigation signals, which are modulated with a BOC method and transmit encrypted information in their sidebands, comprising the acts of: capturing only one of the sidebands of an encrypted GNSS navigation signal, transmitting only the samples of the captured sideband of the encrypted GNSS navigation signal to a secured server for calculating a PVT from the received samples, and receiving the calculated PVT from the secured server.

The act of capturing of only one of the sidebands of an encrypted GNSS navigation signal may comprise front-end processing, down-conversion, filtering and analog to digital conversion of only one of the sidebands of the encrypted GNSS navigation signal.

Alternatively, the act of capturing of only one of the sidebands of an encrypted GNSS navigation signal may comprise sampling the encrypted GNSS navigation signal completely and reducing the sampled signal to only one of the sidebands by performing a signal processing technique.

The performing of a signal processing technique can comprise down converting of the sampled signal into a baseband, splitting the deterministic part of the down converted sampled signal into an upper and a lower sideband signal, filtering the split down converted signal in order to remove the upper or the lower sideband signal, removing the subcarrier modulation of the filtered sideband signal in order to obtain a sideband signal with a center frequency 0, and decimating the sideband signal with a center frequency 0 in order to obtain a captured sideband signal with a lower sample rate.

A further embodiment of the invention relates to a computer program, which implements the method according to the invention and as described herein and enabling positioning by using encrypted GNSS navigation signals provided according to the invention when executed by a computer. Such a computer program could be used by a computer equipped with a GNSS receiver, for example a smartphone or portable navigation computer, enabling the computer to not only process standard GNSS navigation signals, but also encrypted GNSS service signals such as the PRS signals from Galileo. The computer must not be equipped with a security module, but has only to be configured for communication with a secured server in order to perform positioning with encrypted GNSS navigation signals.

According to a further embodiment of the invention, a record carrier storing a computer program according to the invention may be provided, for example a CD-ROM, a DVD, a memory card, a diskette, or a similar data carrier suitable to store the computer program for electronic access.

A yet further embodiment of the invention relates to a GNSS receiver for positioning by using encrypted GNSS navigation signals, which are modulated with a BOC method and transmit encrypted information in their sidebands, comprising means for capturing only one of the sidebands of an encrypted GNSS navigation signal, means for transmitting samples of the captured sideband of the encrypted GNSS navigation signal to a secured server being provided for calculating a PVT from the received samples, and means for receiving the calculated PVT from the secured server.

The means for capturing only one of the sidebands of an encrypted GNSS navigation signal may comprise a RF front end for converting a received encrypted GNSS navigation signal into a baseband, a filter for removing the upper or the lower sideband signal from the down converted signal, a multiplier and a subcarrier wipeoff unit for removing the subcarrier modulation of the filtered sideband signal, and a decimation unit for obtaining a captured sideband signal with a lower sample rate.

The means for transmitting only the samples of the captured sideband of the encrypted GNSS navigation signal to a secured server and/or means for receiving the calculated PVT from the secured server may be configured to establish a secured communication link with the secured server via a communication network, particularly the internet.

An example which does not describe part of the invention relates to a secured server for calculating a PVT from samples of a sideband of an encrypted GNSS navigation signal received from a GNSS receiver of the invention and as described herein and comprising a PRS decryption unit for decrypting the received samples of the sideband of the encrypted GNSS navigation signal, a PRS software receiver for calculating a PVT from the decrypted samples of the sideband of the encrypted GNSS navigation signal, and means for transmitting the calculated PVT to the GNSS receiver. The secured server may be for example implemented by a PC configured to execute a computer program implementing the PRS software receiver and the PRS decryption unit and equipped with a network adapter in order establish particularly secured communication links with GNSS receivers according to the invention and as described herein

These and other aspects of the invention will be apparent from and elucidated with reference to the embodiments described hereinafter.

The invention will be described in more detail hereinafter with reference to exemplary embodiments. However, the invention is not limited to these exemplary embodiments.

BRIEF DESCRIPTION OF DRAWINGS

Fig. 1    shows an embodiment of a block diagram of an implementation of system positioning by using encrypted GNSS navigation signals with a GNSS receiver and a secured server according to the invention; and

Fig. 2    shows the Power Spectral Density of BOCc(15,2.5) modulated GNSS navigation signal.

DESCRIPTION OF EMBODIMENTS

In the following, functionally similar or identical elements may have the same reference numerals. Furthermore, the following embodiment of the invention is described for the case of Galileo PRS, but it should be noted that the invention can be applied to any secured navigation signals and services which use message and / or ranging code encryption.

In the following, an embodiment of the invention is described in detail, where a received Galileo PRS signal is sampled completely and the reduction to one sideband allowing for the reduction of the sample rate is performed by signal processing techniques.

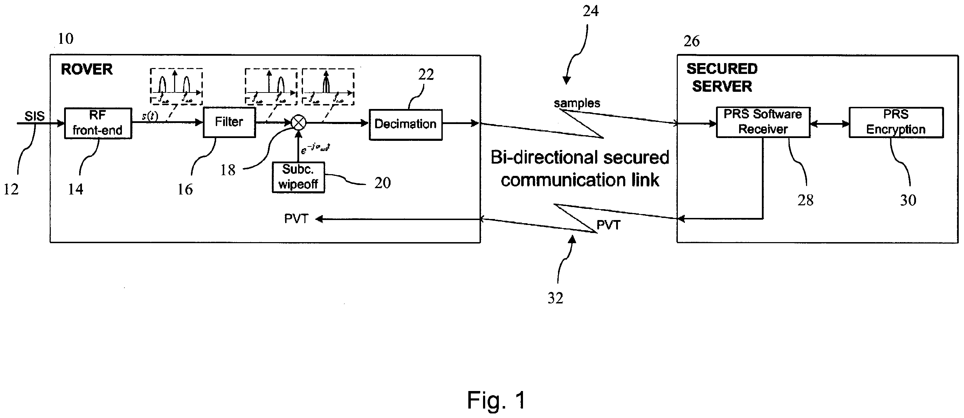

Fig. 1 shows a receiver 10 being a rover for a Galileo SIS (Signal-In-Space) 12. The SIS 12 is BOC modulated and transmits encrypted PRS information in its sidebands.

At the receiver 10, the received SIS 12 is in a RF front-end 14 down converted in a complex baseband. A simplified model for a BOC signal $s(t)$, which is output by the RF front-end 14, in the complex baseband is given by

$$s(t) = \frac{A}{\sqrt{2}} \cdot c(t) \cdot b(t) \cdot e^{j\omega_{dop}t} + n(t).$$

Hereby, $A$ is an amplitude, $c(t)$ is the PRN code, $b(t)$ is a rectangular sub-carrier with angular frequency $\omega_{sub}$, $\omega_{dop}$ is the angular Doppler frequency, and $n(t)$ is complex noise. Without impact on the validity of the results, the rectangular sub-carrier can be approximated with a cosine function, leading to

$$s(t) = \frac{A}{\sqrt{2}} \cdot c(t) \cdot \cos(\omega_{sub}t) \cdot e^{j\omega_{dop}t} + n(t).$$

Using some trigonometric identities, the deterministic part of this signal model can be split into an upper sideband signal $s_u(t)$ and a lower sideband signal $s_l(t)$:

$$
\begin{aligned}
s(t) &= \frac{A}{2\sqrt{2}} \cdot c(t) \cdot \left(e^{j\omega_{sub}t} + e^{-j\omega_{sub}t}\right) \cdot e^{j\omega_{dop}t} + n(t) \\
&= \frac{A}{2\sqrt{2}} \cdot c(t) \cdot e^{j\omega_{sub}t} \cdot e^{j\omega_{dop}t} + \frac{A}{2\sqrt{2}} \cdot c(t) \cdot e^{-j\omega_{sub}t} \cdot e^{j\omega_{dop}t} + n(t) \\
&= s_u(t) + s_l(t) + n(t)
\end{aligned}
$$

The first step after downconversion of the BOC signal to baseband is to remove one sideband by an appropriate filtering with a filter 16. For example, if the upper sideband is maintained, the resulting signal after filtering is given by

$$s_{filt}(t) = \frac{A}{2\sqrt{2}} \cdot c(t) \cdot e^{j\omega_{sub}t} \cdot e^{j\omega_{dop}t} + n_{filt}(t)$$

Multiplication by means of a multiplier 18 with $e^{j\omega_{sub}t}$ provided by a subcarrier wipeoff unit 20 removes the subcarrier modulation, which shifts the upper sidelobe to the frequency zero:

$$s_{filt,wo}(t) = \frac{A}{2\sqrt{2}} \cdot c(t) \cdot e^{j\omega_{dop}t} + n_{filt,wo}(t)$$

The resulting signal has a bandwidth that is equal to the bandwidth of the PRN code, and an appropriate decimation with a decimator 22 can now be applied to obtain a signal 24 with a lower sample rate. Alternatively, the lower sidelobe can be used, or IF samples instead of baseband samples.

The signal 24 with the lower sample rate is transmitted by the GNSS receiver 10 to a secured server 26 via a bidirectional secured communication link established between the receiver 10 and server 26, for example an encrypted communication link over the internet such as a VPN (Virtual Private Network), a SSL (Secure Sockets Layer) or another encrypted communication link.

The secured server 26 comprises a PRS software receiver 28 and a a PRS decryption unit 30 corresponding to the security module of a PRS receiver. The PRE software receiver 28 calculates with the received samples 24 after decryption by means of the PRS decryption unit 30 a PVT. The calculated PVT 32 is transmitted with a transmitter over the bidirectional encrypted communication link back to the GNSS receiver 10.

Since only samples from one sidelobe of the PRS signal are transferred from the receiver 10 to the secured server 26, the amount of transferred data is significantly reduced. This reduces the achievable accuracy of the position fix from what is achievable with the complete BOC signal to approximately the accuracy of the corresponding BPSK signal. On the other hand, the potential problem of a false lock to a sidepeak of the correlation function - which can occur with BOC signals - does not exist anymore.

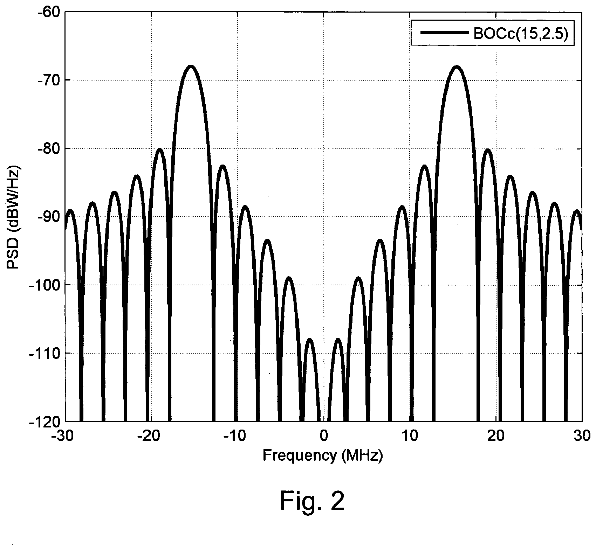

The Power Spectral Density of a BOCc(15,2.5) modulated GNSS navigation signal is shown exemplary in Fig. 2. The Galileo PRS signal on E1 is a BOCc(15,2.5) and would require a sample rate of at least 32.5 MHz to capture both sidelobes, given that complex baseband samples are used. With the inventive approach, the reduction to one sidelobe allows reducing the sample rate to 2.5 MHz, i.e. the data transfer volume is reduced by a factor of 13. Alternatively, for a given data transfer volume, the snapshot duration can be increased by a factor 13, which offers an increase in sensitivity of more than 11 dB.

REFERENCE NUMERALS

| 10 | Rover with Galileo receiver |
|----|------|
| 12 | Galileo SIS with PRS |
| 14 | RF front-end |
| 16 | filter |
| 18 | multiplier |
| 20 | subcarrier wipeoff unit |
| 22 | decimation unit |
| 24 | PRS samples |
| 26 | secured server |
| 28 | PRS software receiver |
| 30 | PRS decryption unit |
| 32 | PVT |

**Claims**

1. A method for positioning by using encrypted Binary Offset Carrier, BOC, modulated Global Navigation Satellite System, GNSS, navigation signals (12), which transmit encrypted information in their sidebands, comprising the acts of:

- capturing (14, 16, 18, 20, 22) only one of the sidebands of an encrypted BOC modulated GNSS navigation signal,
- transmitting only the samples (24) of the captured sideband of the encrypted BOC modulated GNSS navigation signal to a secured server (26) for calculating (28, 30) a position, velocity and/or time - PVT -(32) from the received samples, and
- receiving the calculated PVT (32) from the secured server (26).

2. The method of claim 1, wherein the act of capturing of only one of the sidebands of an encrypted BOC modulated GNSS navigation signal comprises front-end processing, down-conversion, filtering and analog to digital conversion of only one of the sidebands of the encrypted BOC modulated GNSS navigation signal.

3. The method of claim 1, wherein the act of capturing of only one of the sidebands of an encrypted BOC modulated GNSS navigation signal comprises sampling the encrypted GNSS navigation signal completely and reducing the sampled signal to only one of the sidebands by performing a signal processing technique.

4. The method of claim 3, wherein the performing of a signal processing technique comprises down converting of the sampled signal into a baseband, splitting the deterministic part of the down converted sampled signal into an upper and a lower sideband signal, filtering the split down converted signal in order to remove the upper or the lower sideband signal (16), removing the subcarrier modulation of the filtered sideband signal (18, 20) in order to obtain a sideband signal with a center frequency 0, and decimating (22) the sideband signal with a center frequency 0 in order to obtain a captured sideband signal with a lower sample rate (24).

5. A GNSS receiver (10) for positioning by using encrypted Binary Offset Carrier, BOC, modulated Global Navigation Satellite System, GNSS, navigation signals (12), which transmit encrypted information in their sidebands, comprising

- means (14, 16, 18, 20, 22) for capturing only one of the sidebands of an encrypted BOC modulated GNSS navigation signal,
- means for transmitting only the samples (24) of the captured sideband of the encrypted BOC modulated GNSS navigation signal to a secured server (26) being provided for calculating (28, 30) a position, velocity and/or time - PVT -(32) from the received samples, and
- means for receiving the calculated PVT (32) from the secured server (26).

6. The GNSS receiver of claim 5, wherein the means (14, 16, 18, 20, 22) for capturing only one of the sidebands of an encrypted GNSS navigation signal comprise

- a RF front end (14) for converting a received encrypted GNSS navigation signal into a baseband,
- a filter (16) for removing the upper or the lower sideband signal from the down converted signal,
- a multiplier (18) and a subcarrier wipeoff unit (20) for removing the subcarrier modulation of the filtered sideband signal, and
- a decimation unit (22) for obtaining a captured sideband signal with a lower sample rate (24).

7. The GNSS receiver of claim 5 or 6, wherein the means for transmitting samples (24) of the captured sideband of the encrypted GNSS navigation signal to a secured server (26) and/or means for receiving the calculated PVT (32) from the secured server (26) are configured to establish a secured communication link with the secured server (26) via a communication network, particularly the internet.

8. A computer program product comprising instructions to cause the GNSS receiver (10) of claim 5 to execute the steps of the method of claim 1.

9. A computer-readable medium having stored thereon the computer program product of claim 8.

**Patentansprüche**

1. Ein Verfahren zur Positionierung unter Verwendung verschlüsselter Binary Offset Carrier, BOC, modulierter Global Navigation Satellite System, GNSS, Navigationssignale (12), die verschlüsselte Informationen in ihren Seitenbändern übertragen, umfassend die Vorgänge:

- Erfassen (14, 16, 18, 20, 22) nur eines der Seitenbänder eines verschlüsselten BOC modulierten GNSS-Navigationssignals,
- Übertragen nur der Abtastwerte (24) des erfassten Seitenbandes des verschlüsselten BOC modulierten GNSS Navigationssignals an einen gesicherten Server (26) zur Berechnung (28, 30) einer Position, Geschwindigkeit und/oder Zeit - PVT - (32) aus den empfangenen Abtastwerten, und
- Empfangen der berechneten PVT (32) von dem gesicherten Server (26).

2. Verfahren nach Anspruch 1, wobei der Vorgang des Erfassens von nur einem der Seitenbänder eines verschlüsselten BOC modulierten GNSS Navigationssignals eine Front-End-Verarbeitung, Abwärtskonvertierung, Filterung und Analog-Digital-Konvertierung von nur einem der Seitenbänder des verschlüsselten BOC modulierten GNSS Navigationssignals umfasst.

3. Verfahren nach Anspruch 1, wobei der Vorgang des Erfassens von nur einem der Seitenbänder eines verschlüsselten BOC modulierten GNSS Navigationssignals das vollständige Abtasten des verschlüsselten GNSS Navigationssignals und das Reduzieren des abgetasteten Signals auf nur eines der Seitenbänder durch Ausführen einer Signalverarbeitungstechnik umfasst.

4. Verfahren nach Anspruch 3, wobei das Durchführen einer Signalverarbeitungstechnik umfasst Abwärtskonvertieren des abgetasteten Signals in ein Basisband, das Aufspalten des deterministischen Teils des abwärtskonvertierten abgetasteten Signals in ein oberes und ein unteres Seitenbandsignal, das Filtern des aufgespaltenen abwärtskonvertierten Signals, um das obere oder das untere Seitenbandsignal (16) zu entfernen, Entfernen der Unterträgermodulation des gefilterten Seitenbandsignals (18, 20), um ein Seitenbandsignal mit einer Mittenfrequenz 0 zu erhalten, und Dezimieren (22) des Seitenbandsignals mit einer Mittenfrequenz 0, um ein erfasstes Seitenbandsignal mit einer niedrigeren Abtastrate (24) zu erhalten.

5. Ein GNSS-Empfänger (10) zur Positionierung unter Verwendung verschlüsselter Binary Offset Carrier, BOC, modulierter Global Navigation Satellite System, GNSS, Navigationssignale (12), die verschlüsselte Informationen in ihren Seitenbändern übertragen, umfassend

- Mittel (14, 16, 18, 20, 22) zum Erfassen nur eines der Seitenbänder eines verschlüsselten BOC modulierten GNSS-Navigationssignals,
- Mittel zum Übertragen nur der Abtastwerte (24) des erfassten Seitenbandes des verschlüsselten BOC modulierten GNSS Navigationssignals an einen gesicherten Server (26), der zur Berechnung (28, 30) einer Position, Geschwindigkeit und/oder Zeit - PVT - (32) aus den empfangenen Abtastwerten vorgesehen ist, und
- Mittel zum Empfangen des berechneten PVT (32) von dem gesicherten Server (26).

6. GNSS-Empfänger nach Anspruch 5, wobei die Mittel (14, 16, 18, 20, 22) zum Erfassen nur eines der Seitenbänder eines verschlüsselten GNSS Navigationssignals umfassen

- ein HF-Front-End (14) zum Konvertieren eines empfangenen verschlüsselten GNSS Navigationssignals in ein Basisband,
- einen Filter (16) zum Entfernen des oberen oder des unteren Seitenbandsignals aus dem abwärtskonvertierten Signal,
- einen Multiplizierer (18) und eine Unterträger-Abwischeinheit (20) zum Entfernen der Unterträgermodulation des gefilterten Seitenbandsignals, und
- einer Dezimationseinheit (22) zum Erhalten eines erfassten Seitenbandsignals mit einer niedrigeren Abtastrate (24).

7. GNSS-Empfänger nach Anspruch 5 oder 6, wobei die Mittel zum Übertragen von Abtastwerten (24) des erfassten Seitenbandes des verschlüsselten GNSS Navigationssignals an einen gesicherten Server (26) und/oder Mittel zum Empfangen des berechneten PVT (32) von dem gesicherten Server (26) konfiguriert sind, eine gesicherte Kommunikationsverbindung mit dem gesicherten Server (26) über ein Kommunikationsnetz, insbesondere das Internet, herzustellen.

8. Computerprogrammprodukt umfassend Anweisungen, die den GNSS-Empfänger (10) nach Anspruch 5 veranlassen, die Schritte des Verfahrens nach Anspruch 1 auszuführen.

9. Ein computerlesbares Medium, auf dem das Computerprogrammprodukt nach Anspruch 8 gespeichert ist.

**Revendications**

1.  Procédé de positionnement au moyen de signaux de navigation chiffrés (12) de géolocalisation et navigation par un système de satellites, GNSS, modulés par modulation de porteuse à offset binaire, BOC, qui transmettent des informations chiffrées dans leurs bandes latérales comprenant l'action consistant à :

    - capturer (14, 16, 18, 20, 22) uniquement l'une des bandes latérales d'un signal de navigation GNSS modulés de BOC chiffrée,
    - transmettre uniquement les échantillons (24) de la bande latérale capturée du signal de navigation GNSS modulé par BOC chiffré à un serveur sécurisé (26) pour calculer (28, 30) une position, la vitesse et/ou le temps - PVT - (32) à partir des échantillons reçus, et
    - recevoir le PVT calculé (32) en provenance du serveur sécurisé (26).

2.  Procédé selon la revendication 1, l'action de capturer uniquement l'une des bandes latérales d'un signal de navigation GNSS modulé par BOC chiffré comprenant le traitement frontal, la conversion vers le bas, le filtrage et la conversion analogique-numérique d'uniquement l'une des bandes latérales du signal de navigation GNSS modulé par BOC chiffré.

3.  Procédé selon la revendication 1, l'action de capturer uniquement l'une des bandes latérales d'un signal de navigation GNSS modulé par BOC chiffré consistant à échantillonner complètement le signal de navigation GNSS chiffré et à réduire le signal échantillonné à uniquement l'une des bandes latérales en faisant appel à une technique de traitement de signal.

4.  Procédé selon la revendication 3, l'utilisation d'une technique de traitement de signal consistant en la conversion vers le bas du signal échantillonné dans une bande de base, la division de la partie déterministe du signal échantillonné converti vers le bas en un signal de bande latérale inférieure et supérieure, le filtrage du signal converti vers le bas divisé afin de retirer le signal de bande latérale inférieure et supérieure (16), retirer la modulation de sous-porteuse du signal de bande latérale filtré (18, 20) afin d'obtenir un signal de bande latérale ayant une fréquence centrale de 0, et décimer (22) le signal de bande latérale ayant une fréquence centrale de 0 afin d'obtenir un signal de bande latérale capturé à une faible fréquence d'échantillonnage (24).

5.  Récepteur GNSS (10) de positionnement au moyen de signaux de navigation chiffrés de géolocalisation et navigation par un système de satellites, GNSS, modulés par modulation de porteuse à offset binaire, BOC, qui transmettent des informations chiffrées dans leurs bandes latérales, comprenant :

    - des moyens (14, 16, 18 20, 22) pour capturer uniquement l'une des bandes latérales d'un signal de navigation GNSS modulé par BOC chiffré,
    - des moyens pour transmettre uniquement les échantillons (24) de la bande latérale capturée du signal de navigation GNSS modulé par BOC chiffré à un serveur sécurisé (26) pour calculer (28, 30) une position, la vitesse et/ou le temps - PVT - (32) à partir des échantillons reçus, et
    - des moyens pour recevoir le PVT calculé (32) en provenance du serveur sécurisé (26).

6.  Récepteur GNSS selon la revendication 5, les moyens (14, 16, 18 20, 22) pour capturer uniquement l'une des bandes latérales d'un signal de navigation GNSS chiffré comprenant

    - un frontal RF (14) pour convertir un signal de navigation GNSS chiffré reçu en une bande de base,
    - un filtre (16) pour retirer le signal de bande latérale inférieure et supérieure du signal converti vers le bas,
    - un multiplicateur (18) et une unité d'enlèvement de sous-porteuse (20) pour retirer la modulation de sous-porteuse du signal de bande latérale filtré, et
    - une unité de décimation (22) pour obtenir un signal de bande latérale capturé à une faible fréquence d'échantillonnage (24).

7.  Récepteur GNSS selon la revendication 5 ou la revendication 6, le moyen de transmission d'échantillons (24) de la bande latérale capturée du signal de navigation GNSS chiffré à un serveur sécurité (26) et/ou le moyen de réception le PVT calculé (32) en provenance du serveur sécurisé (26) étant configurés pour établir une liaison de communication sécurisée avec le serveur sécurisé (26) par l'intermédiaire d'un réseau de communication, en particulier l'Internet.

8. Produit programme d'ordinateur comprenant des instructions pour amener le récepteur GNSS (10) selon la revendication 5 à exécuter les étapes du procédé selon la revendication 1.

9. Moyen lisible par ordinateur ayant mémorisé en son sein le produit programme d'ordinateur selon la revendication 8.

Fig. 1

Fig. 2

EP 2 799 907 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GLEN GIBBONS.** Civil Galileo System Poses New Options for Secure Services. *Inside GNSS,* 18 December 2012, URL:http://www.insidegnss.com/node/3326